# EUROPEAN PATENT SPECIFICATION

(11) **EP 2 775 188 B1**
(45) Date of publication and mention of the grant of the patent: **28.09.2016**
(21) Application number: 14157045.7
(22) Date of filing: 27.02.2014
(51) Int. Cl.: F04B 11/00, F04B 23/02, F04B 53/16, F16L 37/14

(54) **Connection between tubular elements of components of a pump assembly**
Verbindung zwischen rohrförmigen Elementen von Komponenten einer Pumpenanordnung
Connexion entre des éléments tubulaires de composants d'un ensemble pompe

(30) Priority: 04.03.2013 IT PD20130008 U
(43) Date of publication of application: 10.09.2014
(73) Proprietor: Dab Pumps S.p.A., 35035 Mestrino (Padova) (IT)
(72) Inventor: Iacoponi, Alessandro, Frazione S. Lorenzo a Pagnatico 56021 Cascina (PI) (IT); Sinico, Francesco, 36075 Montecchio Maggiore VI (IT)
(74) Representative: Modiano, Micaela Nadia

(56) References cited:
- WO-A1-99/26010
- DE-U1- 20 011 475
- DE-U1- 20 104 203
- FR-A1- 2 820 489
- US-A1- 2009 079 188

## Description

The present invention relates to a connection between tubular elements of components of a pump assembly.

Nowadays pump assemblies are known which are assembled, or are to be assembled on site during installation, the principal components of which are an electric pump, an inverter that drives the electric pump, and an accumulation tank that acts as a lung for the delivery, such as for example an expansion tank.

Often the tubular portions for connecting components through which liquid flows, such as from the pump body to the tank, have to be joined using various different connector elements and fixing means, such as gaskets, screws, bolts. etc., for example with a flange coupling of the two tubular portions using a certain number of bolts.

Such operations are therefore long and occasionally complex, and not very easy for the installation technician, who is forced to manually keep the parts in their final positions for the entire operation of joining the two parts.

The aim of the present invention is to provide a connection between two tubular elements of components of a pump assembly, in particular those through which liquid flows during the operation of the device, which enables a quick connection of the two elements. Such quick connections are known from WO 99/26010.

Within this aim, an object of the invention is to provide a connection that simplifies the operations of assembling the pump assembly for the installation technician.

This aim and this and other objects which will become better evident hereinafter are achieved by a connection between tubular elements of components of a pump assembly, in particular between a first tubular element having a first end portion and a second tubular element having a second end portion, said connection being characterized in that said first tubular element, which is integral with one of said components, is coupled with said second tubular element, which is integral with another of said components, containing the corresponding second end portion thereof, and the two tubular elements are made integral by way of a locking element that passes at least partially through both of them in a direction that is transverse to the direction of their coupling.

Further characteristics and advantages of the invention will become better apparent from the description of a connection, according to the present invention, which is illustrated by way of non-limiting example in the accompanying drawings wherein:
Figure 1 is an exploded perspective view of the connection according to the invention with the pump assembly to be assembled;
Figure 2 is a cross-sectional view of the connection according to the invention;
Figure 3 is another cross-sectional view of the connection according to the invention;
Figure 4 is a view of a pump assembly in which some elements are connected by way of the connection according to the invention.

With reference to the figures, the connection according to the invention as specified in claim 1, generally designated by the reference numeral 10, associates tubular elements 11 of components 12 that belong to a pump assembly 13.

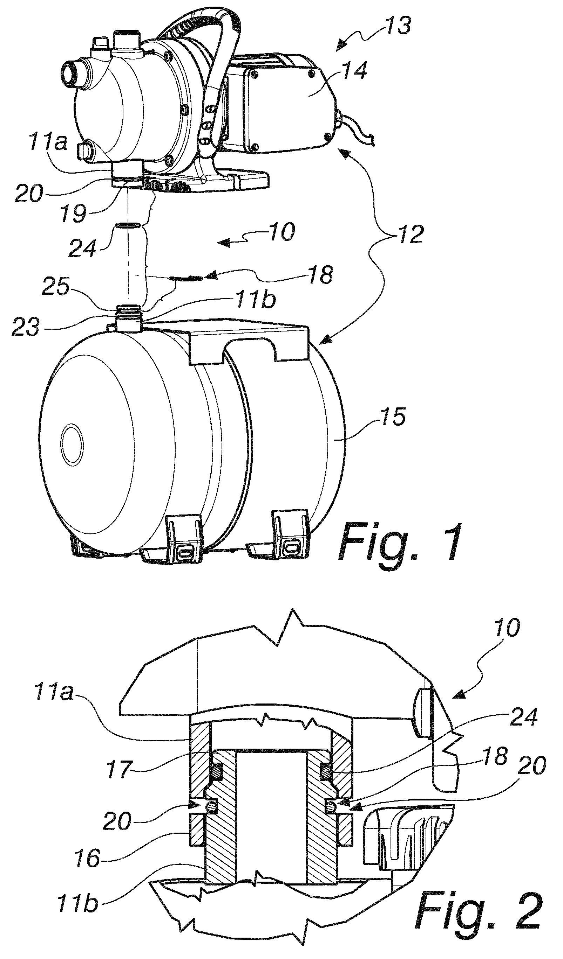

In particular, as can be seen from the exploded view in Figure 1 and from the enlarged view of the cross-section in Figure 2, a first tubular element 11a, which is integral with one of the components 12 of the pump assembly 13, mates with a second tubular element 11b, which is integral with another of the components 12. In the example described the connection 10 according to the invention is used to assemble a pump body 14 and a tank 15 in the same pump assembly 13. The first tubular element 11a originates in fact from the delivery of the pump body 14, while the second tubular element 11b feeds the tank 15. The coupling occurs at their respective end portions, first 16 and second 17. The first tubular element 11a mates with the second 11b containing the corresponding second end portion 17 thereof and the two are made integral by way of a locking element 18 that passes partially through both of them in a direction that is transverse to the direction of their coupling.

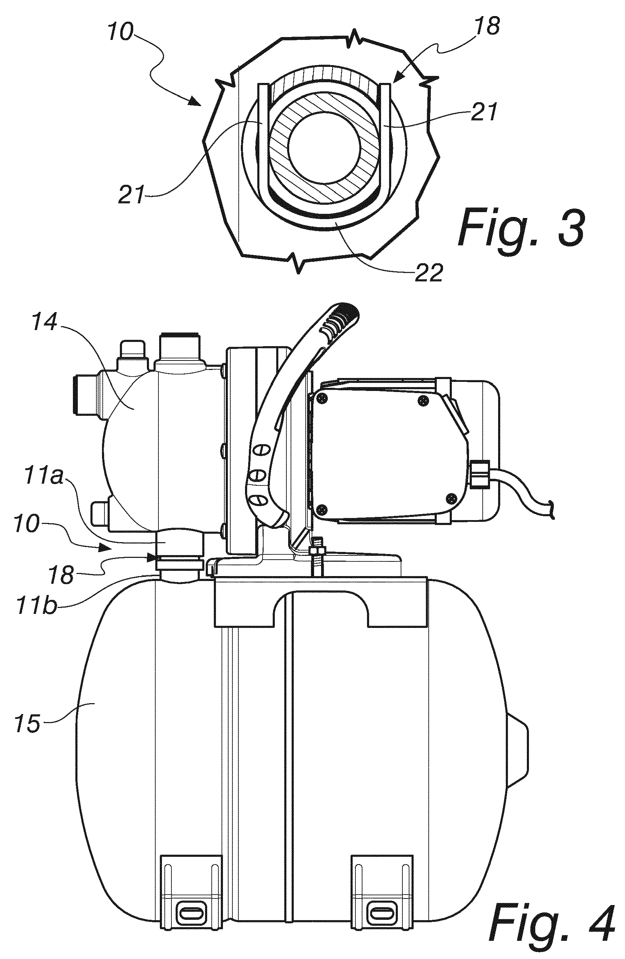

As can be clearly seen in the exploded view in Figure 1, such locking element 18 consists of a U-shaped fork that crosses the tubular elements 11, when one is already inserted in the other as in Figure 4, in a direction that is transverse to the direction of their coupling. In particular, as illustrated in the cross-sections in Figure 2 and in Figure 3, the fork is inserted in a slot 19 that is defined around the first end portion 16, the one belonging to the first tubular element 11a, and which is substantially shaped complementarily to the fork. More specifically, the slot 19 advantageously defines two diametrically opposed openings 20 into which the fork is inserted tangentially with two parallel arms 21, which extend from a crossmember 22 of the fork, in order to be positioned with such arms, again tangentially, in a first slit 23 that is defined on the second end portion 17, that of the second tubular element 11b, correspondingly to the slot 19.

The connection 10 according to the invention conveniently also comprises a gasket 24 of the O-ring type, which surrounds the second end portion 17 at a second slit 25 thereof, which is closer to the end of the second tubular element 11b with respect to the first slit 23.

Use of the connection according to the invention is the following.

Assembly using the connection 10 occurs by inserting the second tubular element 11b of the tank 15, already provided with the gasket 24 for the seal, into the first tubular element 11a of the pump body 14 and immediately afterward applying the locking element 18 in order to prevent its extraction.

In particular, as can be grasped from what has already been described, the fork is inserted with its parallel arms 21 and the crossmember 22 in the slot 19 of the first end portion 16 and simultaneously, tangentially, with the two parallel arms 21 in the first slit 23 of the second end portion 17.

It should be noted that, according to this solution, the single means employed for joining the two components 12 of the pump assembly 13 is the locking element 18, i.e. the fork.

In practice it has been found that the invention fully achieves the set aim and object by providing a connection that makes possible a rapid connection of the two tubular elements, and which simplifies the assembly operations for the operator, thanks to the simplicity of use and to the extremely reduced number of means employed.

In practice the materials employed, provided they are compatible with the specific use, and the dimensions, may be any according to requirements and to the state of the art.

The disclosures in Italian Utility Model Application No. PD2013U000008 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A pump assembly (13) comprising a pump body (14) and tank (15) that are mutually connected, and a connection (10) between a first end portion (16) of a first delivery tubular element (11a) integral with and originating from the pump body (14), and a second end portion (17) of a second feeding tubular element (11b) of the tank (15) and integral with said tank (15), said first tubular element (11a) being coupled with said second tubular element (11b) by being mutually inserted in a coupling direction and the two tubular elements (11a, 11b) being made integral by way of a locking element (18) that passes at least partially through both of them in a direction that is transverse to said coupling direction, said locking element (18) consisting of a U-shaped fork that crosses said tubular elements (11) in a direction that is transverse to the direction of their coupling, and said U-shaped fork being inserted in a slot (19) that is defined around said first end portion (16) of said first tubular element (11a), and which is substantially shaped complementarily to said fork and defines two diametrically opposed openings (20) into which said fork is inserted tangentially with two parallel arms (21), which extend from a crossmember (22), in order to be positioned with such arms, again tangentially, in a first slit (23) that is defined on a second end portion (17) of said second tubular element (11b), correspondingly to said slot (19).

2. The pump assembly with the connection (10) according to claim 1, **characterized in that** it comprises a gasket (24) of the O-ring type, which surrounds said second end portion (17) at a second slit (25) thereof, which is closer to the end of said second tubular element (11b) with respect to said first slit (23).

## Patentansprüche

1. Eine Pumpenanordnung (13), die einen Pumpenkörper (14) und einen Tank (15) umfasst, die miteinander verbunden sind, und eine Verbindung (10) zwischen einem ersten Endabschnitt (16) eines ersten rohrförmigen Abgabeelements (11a), die integral mit dem Pumpenkörper (14) und von ihm ausgehend ist, und einem zweiten Endabschnitt (17) eines zweiten rohrförmigen Zufuhrelements (11b) des Tanks (15), das integral mit dem Tank (15) ist, wobei das erste rohrförmige Element (11a) mit dem zweiten rohrförmigen Element (11b) dadurch gekoppelt ist, dass sie in einer Kopplungsrichtung ineinander eingesetzt sind, und wobei die zwei rohrförmigen Elemente (11a, 11b) durch ein Verriegelungselement (1B) integral gemacht sind, das zumindest teilweise durch beide in einer Richtung verläuft, die quer zu der Kopplungsrichtung ist, wobei das Verriegelungselement (18) aus einer U-förmigen Gabel besteht, die die rohrförmigen Elemente (11) in einer Richtung quert, welche transversal zu ihrer Kopplungsrichtung ist, und wobei die U-förmige Gabel in eine Vertiefung (19) eingeführt ist, die um den ersten Endabschnitt (16) des ersten rohrförmigen Elements (11a) herum bestimmt ist und die im Wesentlichen komplementär zu der Gabel geformt ist und zwei diametral entgegengesetzte Öffnungen (20) bestimmt, in welche die Gabel tangential mit zwei parallelen Armen (21) eingesetzt wird, welche sich von einem Querträger (22) erstrecken, um mit diesen Armen, erneut tangential, in einem ersten Schlitz (23) positioniert zu werden, der in einem zweiten Endabschnitt (17) des zweiten rohrförmigen Elements (11b) bestimmt ist, entsprechend der Vertiefung (19).

2. Die Pumpenanordnung mit der Verbindung (10) gemäß Anspruch 1, **dadurch gekennzeichnet, dass** sie eine Dichtung (24) vom O-Ring-Typ umfasst, die den zweiten Endabschnitt (17) an einem zweiten Schlitz (25) desselben umgibt, der näher dem Ende des zweiten rohrförmigen Elements (11b) ist als der erste Schlitz (23).

## Revendications

1. Ensemble de pompe (13) comprenant un corps de pompe (14) et un réservoir (15) qui sont mutuellement reliés, et un raccord (10) entre une première partie d'extrémité (16) d'un premier élément tubulaire de distribution (11a) d'un seul tenant avec le corps de pompe (14) et provenant de celui-ci, et une deuxième partie d'extrémité (17) d'un deuxième élément tubulaire de distribution (11b) du réservoir (15) et d'un seul tenant avec ledit réservoir (15), ledit premier élément tubulaire (11a) étant accouplé au dit deuxième élément tubulaire (11 b) en étant mutuellement insérés dans une direction d'accouplement et les deux éléments tubulaires (11a, 11b) étant rendus solidaires au moyen d'un élément de verrouillage (18) qui passe au moins partiellement à travers les deux dans une direction qui est transversale à ladite direction d'accouplement, ledit élément de verrouillage (18) consistant en une fourche en forme de U qui croise lesdits éléments tubulaires (11) dans une direction qui est transversale à la direction de leur accouplement, et ladite fourche en forme de U étant insérée dans une fente (19) qui est définie autour de ladite première partie d'extrémité (16) dudit premier élément tubulaire (11a), et qui a une forme sensiblement complémentaire de celle de ladite fourche et définit deux ouvertures (20) diamétralement opposées dans lesquelles ladite fourche est insérée tangentiellement avec des bras (21) parallèles, qui s'étendent d'un élément transversal (22), afin d'être positionnée avec ces bras, de nouveau tangentiellement, dans une première fente (23) qui est définie sur une deuxième partie d'extrémité (17) dudit deuxième élément tubulaire (11b), en correspondance avec ladite fente (19).

2. Ensemble de pompe avec le raccord (10) selon la revendication 1, **caractérisé en ce qu'**il comprend un joint (24) du type joint torique, qui entoure ladite deuxième partie d'extrémité (17) au niveau d'une deuxième fente (25) de celle-ci, qui est plus proche de l'extrémité dudit deuxième élément tubulaire (11b) par rapport à ladite première fente (23).
